# EUROPEAN PATENT APPLICATION

(11) **EP 1 587 039 A2**
(43) Date of publication of application: **19.10.2005**
(21) Application number: 05007804.7
(22) Date of filing: 08.04.2005
(51) Int. Cl.: G07G 1/14

(54) **Printing system, POS system, connection device, and control method for a printing system**

(30) Priority: 08.04.2004 JP 2004114279; 08.04.2004 JP 2004114280
(71) Applicant: SEIKO EPSON CORPORATION, Shinjuku-ku, Tokyo 163-0811 (JP)
(72) Inventor: Minowa, Masahiro, Suwa-shi Nagano-ken 392-8502 (JP)
(74) Representative: Hoffmann, Eckart

(57) **Abstract**

Advertising or sales promotion information can be additionally printed on a receipt (61) without needing to change the POS application. The POS system (10) has a terminal computer (40) for generating first print data based on transaction information, an IP server (70) for generating second print data as the advertising or sales promotion information, and a printer (50) in which an interface device (51) for connection to the terminal computer (40) and information-providing server (70) can be installed. The interface device (51) has a first print data processing unit (151) and a second print data processing unit (153). The first print data processing unit (151) passes the first print data received from the terminal computer to the printer and information-providing server. The second print data processing unit (153) sends the second print data received from the information-providing server to the printer. The information-providing server generates the second print data by interpreting the first print data received from the interface device.

## Description

### BACKGROUND OF THE INVENTION

### 1. Field of technology

The present invention relates to a printing system having a terminal computer for generating first print data for printing transaction information on a receipt, an information-providing server for generating second print data for printing advertising or sales promotion information on a receipt, and a printing apparatus that is connected to the terminal computer and information-providing server and prints based on the first print data and second print data. The invention also relates to a POS (point-of-sale) system, a connection device, a control method for this printing system, and a control program.

### 2. Description of Related Art

POS terminals that can print advertising or sales promotion information (simply referred to as "ASP information" hereinafter) about specially priced items or events, for example, on a receipt in addition to the typical product information about the purchased goods and prices are widely used in POS systems commonly used in supermarkets, convenience stores, and other retail businesses. Specialized systems for issuing coupons and lottery tickets, for example, instead of only ASP information have also been introduced. Specially targeted sales promotion information may also be added by these systems, making the printed receipt an effective sales promotion tool.

A conventional POS system as described above typically has a POS server that stores the product master and centrally manages a plurality of POS terminals, and an information-providing server for serving the ASP information. When processing a transaction, the barcode contained on each product purchased by the customer is scanned to capture the input data (specifically a product code), which is sent to the POS server. The POS server then retrieves the product data, specifically the product name and price information, from the product master stored on the server based on the supplied product code, and this product data is used to generate the product information to be printed on the receipt. The POS server or POS terminal also sends this input data (product code) to the information-providing server. The information-providing server then extracts and sends the ASP information related to the transaction data (the items to be purchased, for example) back to the POS server or POS terminal. The POS server or POS terminal then generates print data based on this product information and ASP information and sends the resulting print data to a dedicated printing apparatus to issue a ticket or coupon containing ASP information (JP 2003-500767 A, Fig. 2).

In order to add such a function for adding ASP information to an existing POS system (a POS system that can only print receipts containing product information relating to the purchased products and their prices) that does not already have a function for adding such ASP information, the POS application or POS terminal must be modified by, for example, providing a connection to the information-providing server and adding a process for sending data input to the POS terminal to the information-providing server. As a result, many retailers are forced to forgo using this extremely effective advertising and sales promotion means.

An object of the present invention is therefore to provide without requiring modification of the POS application or POS terminal a printing system, POS system, connection device, printing system control method, and control program enabling adding a function for adding and printing ASP information on a receipt.

### SUMMARY

This object is achieved by a printing system as claimed in claim 1, a connection device as claimed in claim 17, and a method as claimed in claim 18. Preferred embodiments of the invention are subject-matter of the dependent claims.

The printing system and the control method of the invention enable printing both first print data received from a terminal computer (first host device) and second print data received from an information-providing server (second host device) on a common printer. As a result, a function whereby transaction process information (first print data) can be printed and ASP information (second print data) can be additionally printed to the issued receipt can be added without changing the POS application or modifying the terminal computer.

Other objects and attainments together with a fuller understanding of the invention will become apparent and appreciated by referring to the following description and claims taken in conjunction with the accompanying drawings.

### BRIEF DESCRIPTION OF THE DRAWINGS

- Fig. 1: is a schematic diagram of a POS system according to a preferred embodiment of the present invention;
- Fig. 2: is an external perspective view of the terminal computer;
- Fig. 3: is an external perspective view of the interface device;

- Fig. 4: is a function block diagram of the printing apparatus and information-providing server;
- Fig. 5: is a control block diagram of the interface device;
- Fig. 6: shows a print sample of a receipt with ASP information;
- Fig. 7: is a flow chart showing processing the first print data and paper cut command in the interface device;
- Fig. 8: is a flow chart showing processing the end identification code and second print data in the interface device;
- Fig. 9: is a flow chart showing processing the first print data and second print data in the IP server;
- Fig. 10: is a function block diagram of a printing system according to a second embodiment of the present invention;
- Fig. 11: shows a print sample of a receipt with ASP information in a second embodiment of the invention;
- Fig. 12: is a flow chart showing processing the first print data in the printer driver in the second embodiment of the invention;
- Fig. 13: is a flow chart showing processing the first print data paper cut command in the interface device in the second embodiment of the invention;
- Fig. 14: is a flow chart showing processing the second print data in the IP server in the second embodiment of the invention;
- Fig. 15: is a flow chart showing processing the second print data in the interface device in the second embodiment of the invention; and
- Fig. 16: is a flow chart showing processing the first print data and paper cut command in the interface device in the second embodiment of the invention when the interface device is set to the non-information-providing mode.

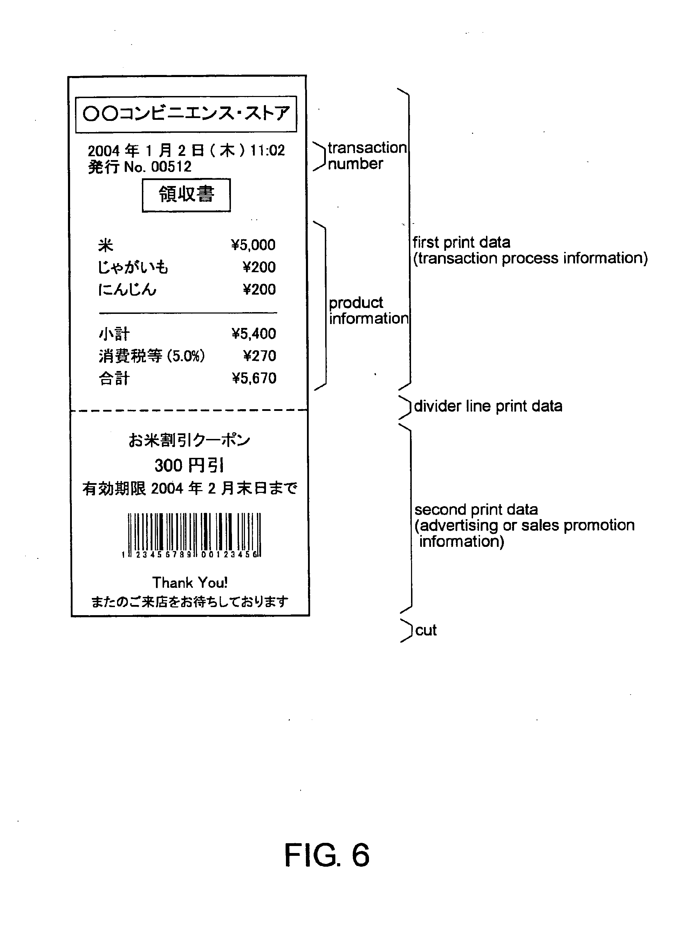

A POS system according to the present invention has at least one POS terminal and a POS server for managing the POS terminal or terminals. Each POS terminal has a terminal computer for generating first print data containing primarily transaction information to be printed on paper based on input data from the operator, and a printing apparatus (printer) for printing the transaction information (first print data). The invention enables adding to this POS system the ability to print and issue receipts on which ASP information is also printed (see Fig. 6) without modifying the POS application running on the terminal computer by installing a connection device (interface device) of this invention in an expansion slot of the printer. This connection device enables connecting to an information-providing server that provides the ASP information (second print data). Such printing system having a terminal computer, an information-providing server ("IP server" below), and a printing apparatus, and a control method for this printing system, are described below according to the present invention using by way of example a POS system used in a supermarket, convenience store, drug store, or other retail business.

### First Embodiment

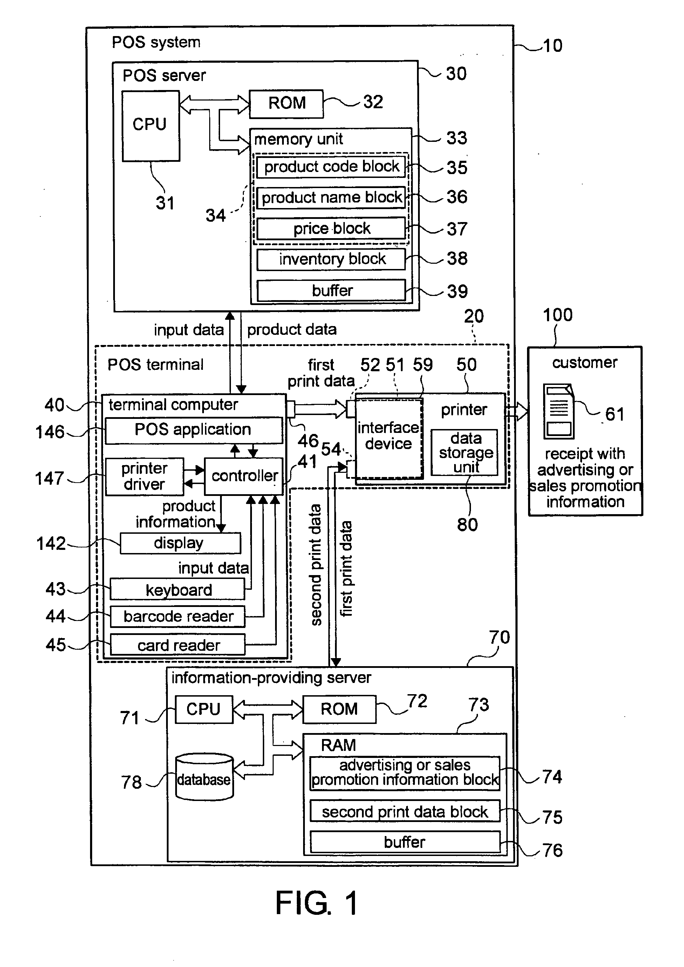

As shown in Fig. 1, the POS system 10 of this exemplary embodiment has a plurality of POS terminals 20 (only one being shown in Fig. 1), a POS server 30 and an IP server 70. Each POS terminal 20 has a terminal computer 40 and a printer 50 (receipt printer) which are connected to each other through connectors. The POS terminals 20 acquire product data (input data) as a result of the operator (user) scanning the barcode printed on or applied to each product. The POS server 30 is connected to each of the POS terminals 20 over a network and manages the input data entered to the POS terminals 20.

The POS server 30 has a CPU 31 (control device)), a ROM 32, a RAM, a hard disk drive, or some combination thereof in a memory unit 33, and processes data stored in a buffer 39 in the memory unit 33 according to a control program stored in the ROM 32.

The memory unit 33 also includes a product code block 35, product name block 36, price block 37, and inventory block 38. Based on the input data for products received from the POS terminal 20, the CPU 31 retrieves information relating to the product code, product name, and price, and generates the product data used for printing on a receipt 61 and displaying on the display 42 of the POS terminal 20.

The term "product data" refers to data from which first print data, i.e., transaction information, to be printed on the receipt 61 is generated. The product code block 35, product name block 36, and price block 37 are parts of a lookup table 34 also known as a product master.

The terminal computer 40 of the POS terminals 20 references the product master (lookup table 34) stored on the POS server 30 and acquires product data from the POS server 30. The printer 50 prints on roll paper based on the first print data and second print data acquired from the IP server 70.

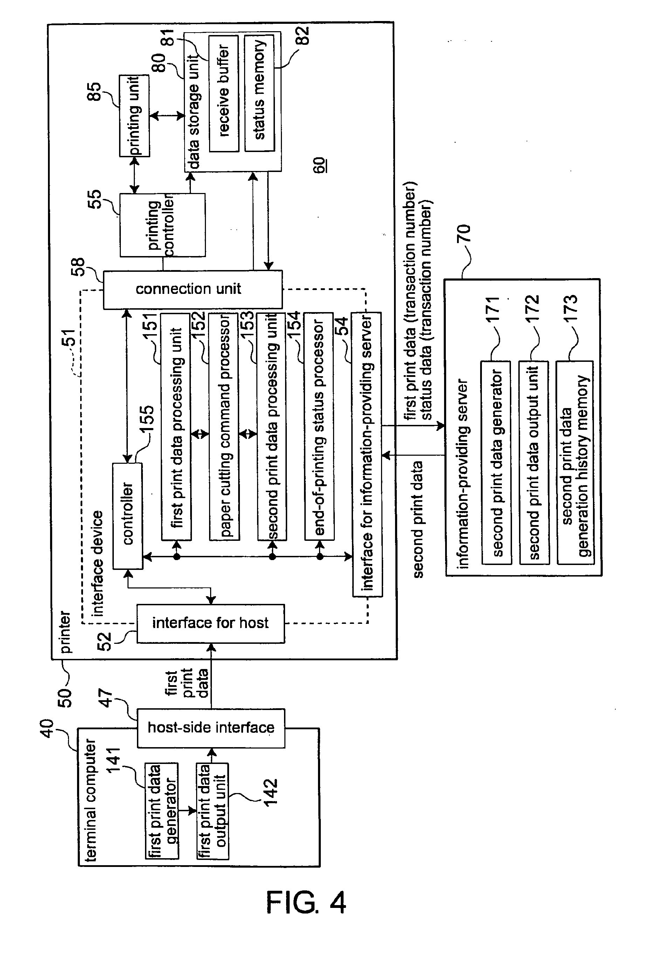

The terminal computer 40 has a POS application 146 for running a transaction process, a printer driver 142 (first print data output unit 142 in Fig. 4) for controlling printing on the printer 50, and a controller 41 for overall control of the terminal computer 40.

The controller 41 acquires product data relating to the product code, product name, and price of the purchased products from the POS server 30 based on input data acquired from the keyboard 43 and/or a barcode using a barcode reader 44. The controller 41 also acquires information for credit card transactions and input data relating to a member, such as a member number, when the operator reads the customer's 100 credit card or membership card (such as a preferred customer card) using a card reader 45. The controller 41 also communicates with the POS application 146 to set a unique transaction number for each transaction process, and generates transaction process data based on the product data received from the POS server 30. The controller 41 further generates the first print data including the transaction number information and the transaction process data, and sends the first print data through a printer driver (not shown) to the printer 50 (interface device 51). The controller 41 also presents the generated product information on the display 42 and displays at least the total amount of the purchase for the operator and customer 100.

An interface device 51 can be freely installed in and removed from is an expansion slot 59 in the printer 50. The interface device 51 has a first port providing an interface for connecting the terminal computer 40 (referred to as the host interface 52 below) and a second port providing an interface for connection to the IP server 70 (referred to as the IP server interface 54 below). The interface device 51 passes print commands for the first print data received from the terminal computer 40 and the second print data received from the IP server 70 to the print processing unit 60 (composed of the printing unit 85, data storage unit 80, and printing controller 55 as shown in Fig. 4). The interface device 51 also monitors the status of the printer and sends status data (end status data) denoting the second print data transmission timing to the IP server 70. The interface device 51 also extracts the transaction number from the first print data received from the terminal computer 40, and adds the transaction number in a format enabling the transaction number to be differentiated from the other print data to the first print data, and sends this first print data to the IP server 70.

As shown in Fig. 4, the printer 50 has a data storage unit 80 with a receive buffer 81 and a status memory 82 for storing printer status data. The receive buffer 81 temporarily stores the print data and control commands acquired through the interface device 51. The printer 50 runs processes such as the printing process and receipt cutting process based on printing instructions and command processing instructions contained in the print data and control commands, prints the first print data and second print data on paper, and thereby issues the sales receipt 61 also having ASP information printed thereon.

Fig. 6 shows an example of a receipt 61 also having ASP information. The first print data, second print data, and divider line data denoting the boundary between the first print data and second print data (such as a dotted line) are printed on this receipt 61. As described above, the first print data includes the transaction number and product information (individual product names and prices, and the total purchase amount), and the second print data includes ASP information (such as a human-readable discount coupon and a barcode for scanning by a barcode reader 44 when the ASP information is a discount coupon). The issued receipt 61 is handed by the operator to the customer 100. The POS system can thus issue sales receipts, coupons, and provide additional information about up-coming events, for example, on a single receipt.

If the printer 50 is an inkjet printer, for example, capable of monochrome and color printing, the printer 50 can commonly be set to a color printing mode or a monochrome printing mode by means of a DIP switch (not shown in the figure) or software switch (not shown in the figure) provided for the printer 50. In this arrangement, the interface device 51 acquires information relating to the currently set mode to determine whether color data can be included in the generated print data. A color conversion function could also be rendered in the interface device 51 to enable greater printing variety by, for example, converting color print data to monochrome print data if the print data contains color but the printer is set to the monochrome mode, or by conversely converting monochrome print data to color print data if the print data is monochrome but the printer is set to the color mode, thus enabling the store logo, for example, to be printed in a different color than the transaction information.

If the printer 50 can only print in monochrome mode or only in a color mode, a function for converting print data to a format compatible with the printer based on printer information acquired by the interface device 51 from the printer 50 could also be provided.

Referring to Fig. 1 again, the IP server 70 has memory such as ROM 72 or RAM 73 in addition to a CPU 71, and stores a database 78. The IP server 70 processes data stored in a buffer 76 in RAM 73, for example, according to a control program stored in the ROM 72. Reserved in the RAM 73 are an ASP information block 74 for storing the ASP information table referenced to generate the second print data according to the content of the first print data, and a second print data block 75 for temporarily storing the generated second print data.

Based on the first print data received from the terminal computer 40 through the interface device 51, the CPU 71 references the ASP information table to generate the second print data, detects the end of one transaction and stops interpreting the received data when the end status data denoting the substantial end of the first print data is received from the terminal computer 40 (interface device 51), and generates, based on the interpreted data, and sends the second print data to the interface device 51. The CPU 71 also stores a history of generating the second print data to the database 78. If the second print data is data for printing a discount coupon, for example, this generation history can be used as a record for verifying that a coupon was not generated illegally, for example.

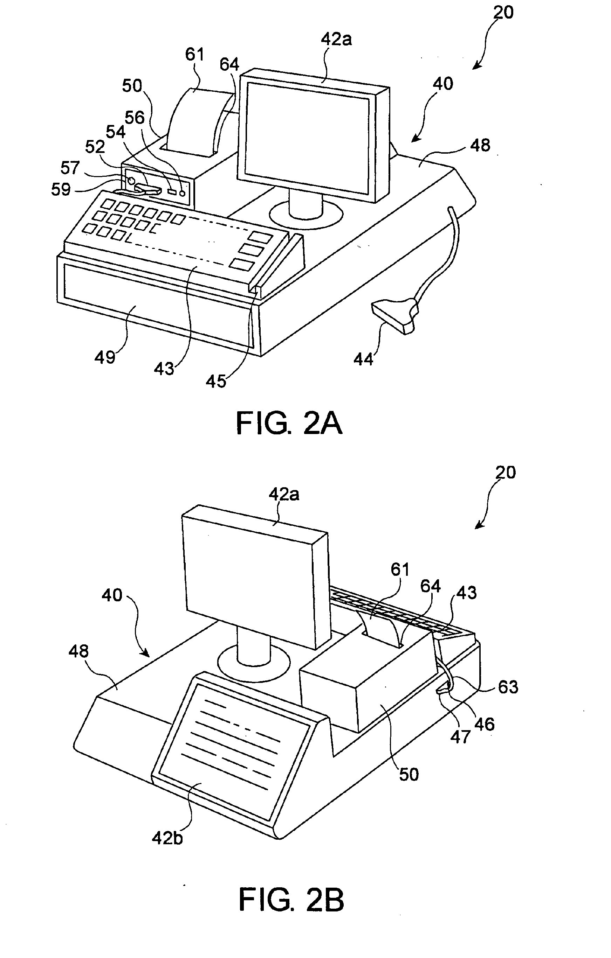

The arrangement of the POS terminal 20 is further described below with reference to Fig. 2. Fig. 2A is front perspective view of the POS terminal 20 as seen from the operator's side, and Fig. 2B is a rear perspective view of the POS terminal 20 as seen from the customer's side. As shown in these figures, the terminal computer 40 of the POS terminal 20 has a box-like main case 48, and a printer 50 disposed at the left rear area of the main case 48 in this example. The printer 50 is connected to the terminal computer 40 by a cable. The location of the printer 50 is therefore not limited to that shown in Fig. 2, and the printer 50 could be located anywhere within the length of the cable.

The terminal computer 40 has a keyboard 43 at the front top part of the main case 48 enabling the operator to enter input data relating to the products, an operator display 42a at the back right part of the main case 48 for displaying the input data for the operator, and a cash drawer 49 housed inside the main case 48. A barcode reader 44 for reading a barcode printed on or applied to a product is also connected by cable to the right side of the main case 48, and a host-side interface 47 for connection to the printer 50 is provided on the left side. A card reader slot 45 for reading a credit card presented by a customer 100 is provided on the right side of the keyboard 43. A customer display 42b enabling the customer to verify the purchased products and prices, for example, is provided at the back of the main case 48.

The printer 50 has the interface device 51 installed in an expansion slot 59 (a slot for installing an interface circuit board) at the front of the printer 50. This interface device 51 and the terminal computer 40 are connected through the host-side interface 47, host interface 52, and the interface device 51 and IP server 70 are connected through IP server interface 54 (through a cable not shown). A paper exit 64 from which the printed receipt 61 is discharged is formed in the top of the printer 50.

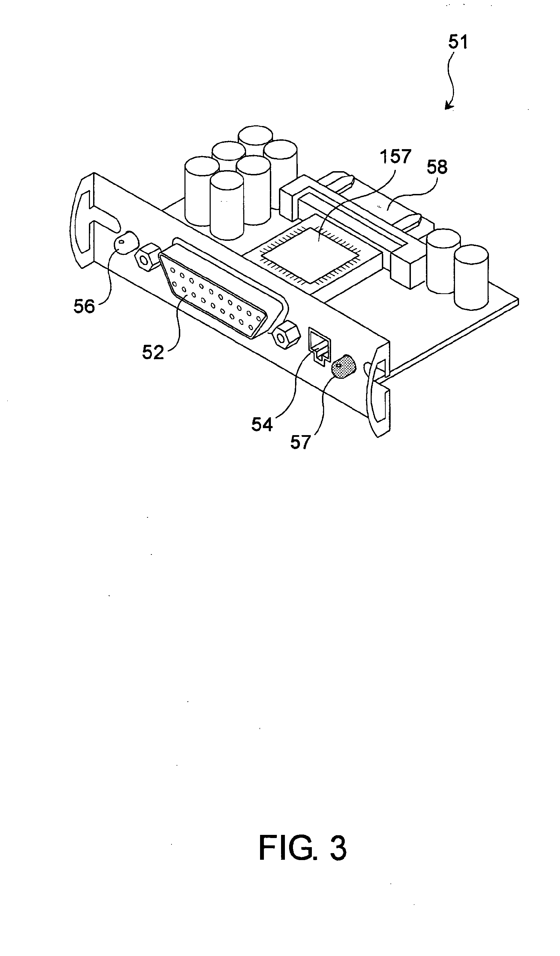

As shown in Fig. 3, an operating status indicator 57, host interface 52, IP server interface 54, and printing status indicator 56 for telling the operator that a printing operation is in progress are disposed at the front of the interface device 51. The interface device 51 is connected to the host-side interface 47 of the terminal computer 40 by means of a cable 63 (see Fig. 2B). The status indicators 57 and 56 are LEDs that flash or light steadily in this embodiment of the invention for easy recognition by the operator, but differ preferably in color to prevent misreading by the operator.

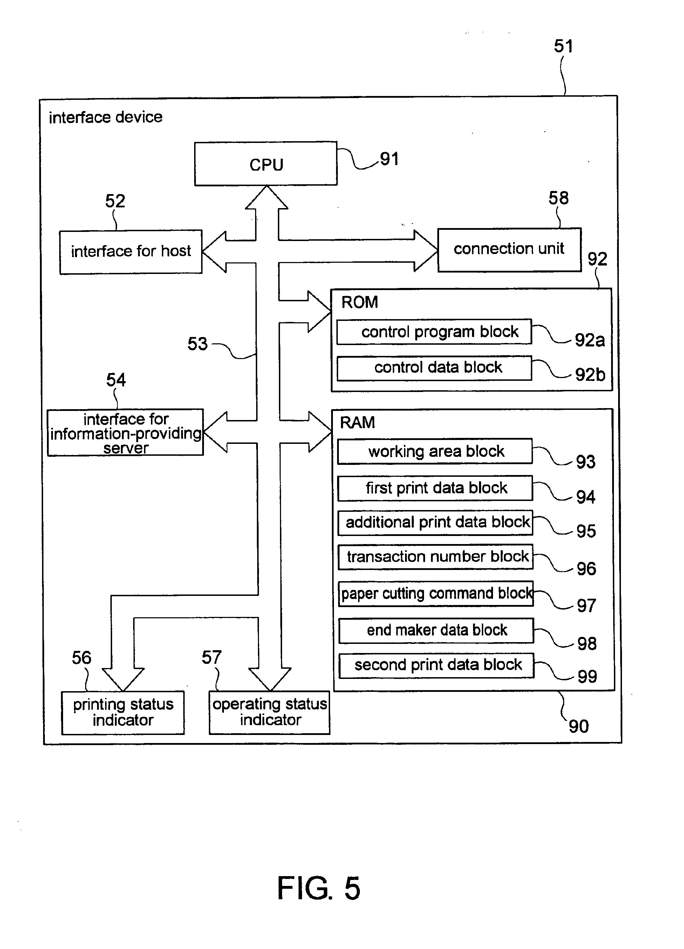

The interface device 51 has a control circuit board 157 with ROM 92, RAM 90, or other memory and components disposed around a CPU 91 (see Fig. 5), and the host interface 52 at the back. The host interface 52, IP server interface 54, operating status indicator 57, and printing status indicator 56 are connected by a bus 53 to the control circuit board 157.

The host interface 52 and IP server interface 54 use a communication protocol enabling, for example, serial data communication based on the RS-232C standard, parallel data communication based on the Centronics standard, a network connection over 10Base-T Ethernet(R), or a data communication standard such as USB. Furthermore, the foregoing plural interfaces are not limited to plural physically discrete interfaces. A single physical connector such as an Ethernet connector could be used, for example, with plural logical interface ports managed by the interface device 51.

The first print data received from the terminal computer 40 can be sent to the IP server 70 by FTP (File Transfer Protocol), UDP (User Datagram Protocol), or other communication protocol. Using FTP over Ethernet(R) offers the advantage of higher reliability than UDP, while UDP offers the advantage of a faster data transfer rate than FTP.

Controlling the terminal computer 40, printer 50 (interface device 51), and IP server 70 (that is, the control arrangement of a printing system according to the present invention) is described next with reference to the function block diagram in Fig. 4. As shown in Fig. 4, the main components of the printer 50 are the interface device 51 and the print processing unit 60, which includes the printing controller 55, data storage unit 80, and printing unit 85 having a print head not shown. The data storage unit 80 includes the receive buffer 81 for storing received print data and control commands, and status memory 82 for storing printer status information.

The interface device 51 has a first print data processing unit 151, an end identification code processor 152 (which in the present embodiment is identical to the paper cut command processor 152 described below), and a second print data processing unit 153.

The first print data processing unit 151 sends first print data received from the terminal computer 40 through the host-side interface 47 and host interface 52 to the print processing unit 60 (the receive buffer 81 thereof) together with a print command, and forwards the first print data to the IP server 70. The end identification code processor 152 detects the end of the print data for one transaction process (i.e., processing one transaction), and the second print data processing unit 153 then sends the second print data received from the IP server 70 to the printing unit 85.

The end identification code processor 152 detects the end of the print data, the last line in the print data, or a specific data string near the end of the print data, and generates the end status data. This is achieved in this embodiment of the invention by a paper cut command processor 152 that detects a paper cut command in the first print data. A specific code denoting the end of printing is required for a printer in which the paper length varies according to the printed content, such as the length of the transaction data printed by a receipt printer, and a paper cut command is generally added to the end of the print data for one transaction when printing by a receipt printer. When the paper cut command processor 152 detects a paper cut command in the first print data, the paper cut command processor 152 temporarily stores the paper cut command without passing the command to the print processing unit 60, generates divider line data (previously stored in ROM 92 (see Fig. 5)), and asserts a divider line data print command.

The second print data processing unit 153 appends the stored paper cut command to the end of the second print data received from the IP server 70. When the print processing unit 60 completes processing the last line of print data in the first print data, such as converting the data stored in the receive buffer to a data format enabling transmission to the print head, the print processing unit 60 sends an end-of-printing status report denoting the substantial end of printing to the interface device 51.

In addition to the components noted above, the interface device 51 also has an end-of-printing status processor 154 for sending this end-of-printing status to the IP server 70, and a controller 155 for controlling the other parts of the interface device 51.

When the first print data is received from the terminal computer 40, the controller 155 passes the first print data to the receive buffer 81 by means of the first print data processing unit 151, sends a print instruction to the printing unit 85, and sends the first print data to the IP server 70. The transaction number set by the terminal computer 40 is also extracted from the first print data at this time.

If the controller 155 detects a paper cut command for automatically cutting across the width of the trailing end of the printed receipt 61 in the first print data, the paper cut command processor 152 temporarily stores the paper cut command, generates divider line print data, and sends a print instruction to the printing unit 85 to print this divider line.

When the controller 155 detects the end-of-printing status data denoting the end of printing at the last line in the first print data from the print processing unit 60, the end-of-printing status processor 154 adds the transaction number to the end-of-printing status data and then sends the end-of-printing status to the IP server 70. The receive buffer 81 in the data storage unit 80 is thus nearly empty because the printing process has ended or nearly ended. From the fact of receiving the end-of-printing status data the IP server 70 can infer that the printer is ready to receive the second print data and start to send the data.

When the controller 155 receives the second print data from the IP server 70, the second print data processing unit 153 appends the saved paper cut command after the second print data, and sends a second print data print instruction and paper cut command processing instruction to the printing unit 85.

The end or near end of printing can be detected by detecting a data string that is normally used near the last line when a receipt is printed. For example, a specific text string that is always printed on a receipt, such as a text string denoting the total amount or sales tax, may not be the last line of print data but still indicate that printing the transaction information is ending. In this situation printing typically ends after printing another one or two lines, and no problems related the transfer time of the following data will occur if such a text string is used to indicate the end of printing (since, as explained, this is not the real end it is also referred to as "substantial end" herein). If a text string printed near the last line of print data is defined as the specific data for detecting the end of printing, the second print data can be acquired sooner, and both the first print data and second print data can therefore be printed more quickly.

The first print data processing unit 151 adds the transaction number to the end of the first print data regardless of the format of the received first print data. By thus adding the transaction number at a known data position (a position determined by the IP server 70 specifications), the IP server 70 can easily detect transaction numbers even when a plurality of POS terminals 20 are connected to the IP server 70.

The first print data could also be converted to a specific data format according to the IP server 70 specifications, and the first print data could be transmitted in a common format. This arrangement enables an IP server 70 connected to a plurality of POS terminals 20 to easily interpret first print data received in a common format, and can thus reduce the processing load on the IP server 70.

The IP server 70 has a second print data generator 171, a second print data output unit 172, and a second print data generation history memory 173.

The second print data generator 171 interprets the first print data from the start of receiving the first print data from the interface device 51 until the end status data is received, and generates the second print data.

The second print data output unit 172 sends the second print data to the interface device 51 when triggered by the reception of the end status data from the interface device 51.

The second print data generation history memory 173 stores the second print data generation history linked to the transaction number.

When the IP server 70 receives the first print data from the interface device 51, the second print data generator 171 generates the second print data by referencing the ASP information table (ASP information block 74, see Fig. 1). More specifically, the second print data is generated by extracting all ASP information linked to the product codes in the first print data from the ASP information table, which stores the product codes (or product names) contained in the first print data linked to particular ASP information (or advertising/promotional information code) for generating the second print data, and by merging (arraying) the extracted ASP information in the order extracted from the table.

If ASP information keyed to a product code contained in the first print data is not found in the table, the second print data is not generated, and status data (a no_data status) indicating there is no second print data, is sent to the interface device 51.

In addition, the second print data generator 171 also extracts the transaction number added to the first print data and adds this transaction number to the second print data. Once the second print data is ready, the second print data generation history memory 173 stores the generation history keyed to the transaction number.

When the IP server 70 receives the end status data with an appended transaction number from the interface device 51, the IP server 70 recognizes the end status data as the end of the data to be interpreted, therefore stops interpreting the received data, and generates the second print data based on the interpreted data. A transaction number matching the transaction number added to the end status data will obviously preferably be added to the second print data.

The control configuration of the interface device 51 is described next with reference to the control block diagram shown in Fig. 5.

As shown in Fig. 5 the interface device 51 has the above-described host (terminal computer) interface 52, the IP server interface 54, and the host interface 52, as well as an operating status indicator 57, the CPU 91, the ROM 92, and the RAM 90 interconnected by an internal bus 53.

The operating status indicator 57 is an LED that lights steadily when the interface device 51 is executing a process and flashes when an error occurs in the interface device 51.

The printing status indicator 56 is also an LED but it emits a different color than the operating status indicator 57. The printing status indicator 56 lights steadily while the interface device 51 is executing a process, including while it is waiting to receive the second print data, and more specifically lights steadily from when the interface device 51 starts receiving (or sending) the first print data from the controller 41 until the paper cut command appended to the second print data received from the IP server 70 and processing ends.

The ROM 92 has a control program block 92a for storing the control program run by the CPU 91, and a control data block 92b for storing control data, including various tables. Note that the divider line data generated when a paper cut command is detected is stored in the control data block 92b.

RAM 90 is used as a working memory for control processes, and includes a working area block 93 used for storing flags, statuses and other data, a first print data block 94 for storing the first print data received from the terminal computer 40, an additional print data block 95 for storing additional print data in the first print data, a transaction number block 96 for storing the transaction number extracted from the first print data, a paper cut command block 97 for temporarily storing a paper cut command extracted from the first print data, an end marker data block 98 for storing the end marker data indicative of the substantial end of the print data received from the terminal computer 40, and a second print data block 99 for storing the second print data received from the IP server 70. Note that the additional print data is a feature of the second embodiment described further below, hence, for an implementation of the first embodiment additional print data block 95 may be omitted.

The first print data, end marker data (included in the first print data), second print data, and other input data is received over the internal bus 53 from the host interface 52, IP server interface 54, and host interface 52, and data and control signals output from the CPU 91 are output over the bus 53 to the terminal computer 40, IP server 70, and printing unit 85 (see Fig. 4) through the interfaces 52, 54, and 58.

Based on a control program stored in ROM 92, the CPU 91 thus handles print data communication (sending and receiving), processing paper cut commands, and controlling the interface device 51, namely receiving input signals and data from the interface device 51, processing data in RAM 90, and outputting signals and data.

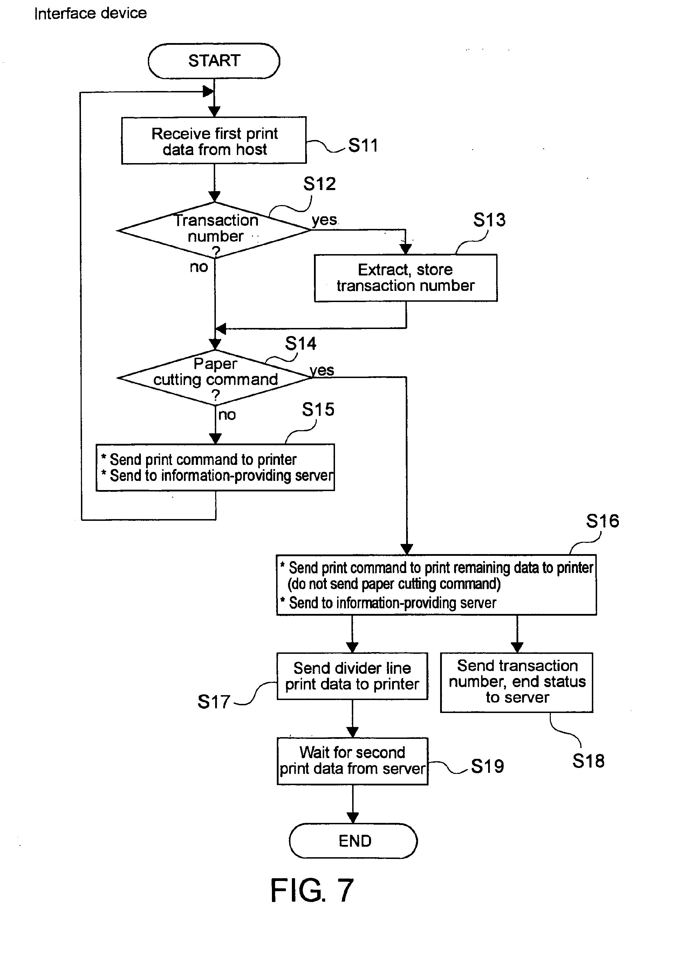

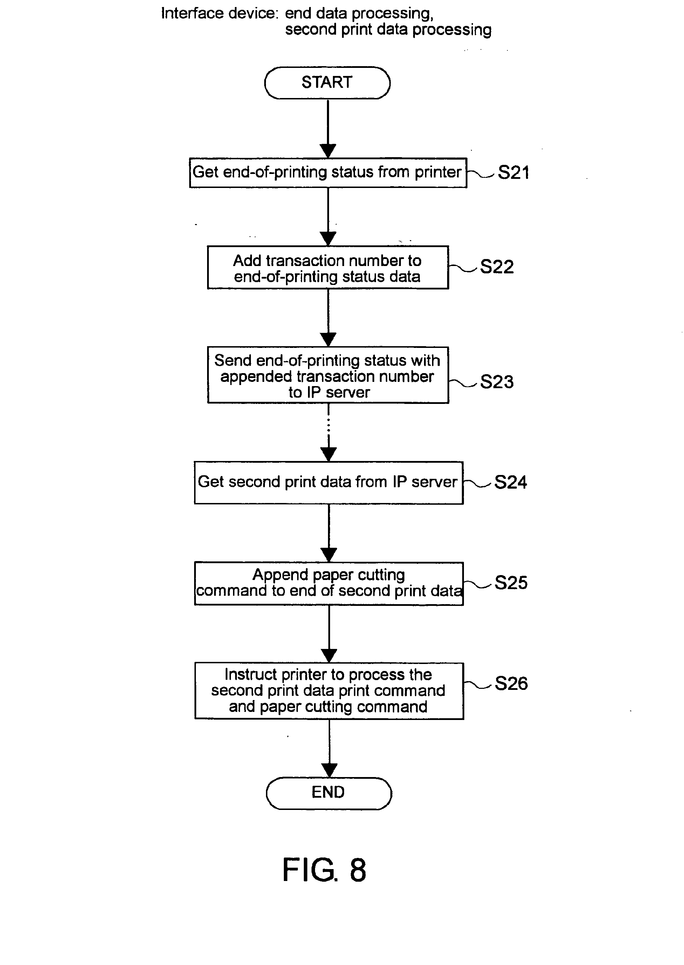

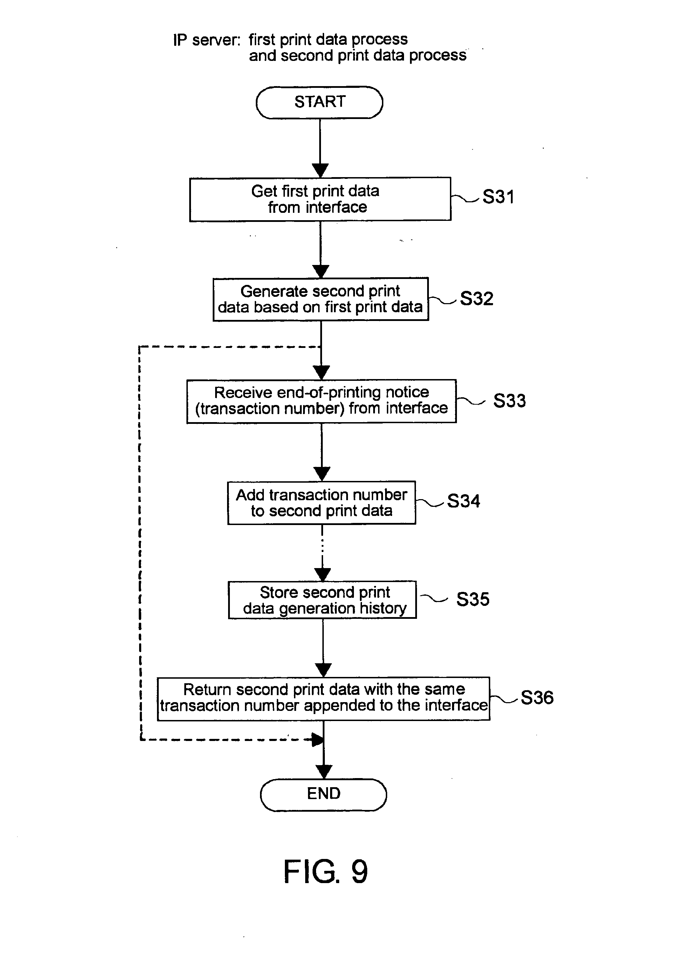

The printing control method of the present invention is described next below with reference to the flow charts in Fig. 7 to Fig. 9. Fig. 7 shows processing the first print data and paper cut command by the interface device 51, Fig. 8 shows the operation from processing the end identification code to processing the second print data by the interface device 51, and Fig. 9 shows from processing the first print data to processing the second print data by the IP server 70.

Referring first to Fig. 7, processing the first print data by the interface device 51 is described next. When the interface device 51 receives the first print data from the terminal computer 40 (S11), the interface device 51 sends a print instruction to the printing unit 85 at the end of each line of data in the print data, and passes the first print data to the IP server 70 with the print instruction sent to the printing unit 85 (S15). Data denoting the transaction number is contained in the first print data as described above. Therefore, when this transaction number is received (detected), the transaction number is extracted (S13) and written to the transaction number block 96 (see Fig. 5).

When a paper cut command is detected in the received print data (generally at the end of the print data) (S14), the paper cut command is saved in the paper cut command block 97 (see Fig. 5) (S16) and a divider line print command is sent to the printing unit 85 instead of the paper cut command (S17). After all of the first print data has been received, the transaction number is appended to the end of the first print data (S18). The transaction number is thus appended to the end of the first print data sent to the IP server 70 in step S12. After the divider line print command is executed the interface device waits to receive the second print data (S19). The saved paper cut command is later appended to the end of the second print data received from the IP server 70 (see step S25, Fig. 8).

The first print data received from the terminal computer 40 is sent line by line together with a print command to the printer. Alternatively, the interface device 51 could send the print data with a print command after all of the first print data has been received. In this case steps S13 to S15 would follow step S11, the print command and data would then be sent in step S12, and the divider line print command would then be sent in S16.

To enable extracting the transaction number or interpreting the print data by the IP server, the data sent from the terminal computer must be in text, XML, or other format enabling the print data content to be interpreted.

The operation of the interface device 51 from processing the end-of-printing status to processing the second print data is described next with reference to Fig. 8.

When the interface device 51 receives the end-of-printing status indicating the end of processing the first print data at or near the last line of the print data (S21), the interface device 51 appends the transaction number stored in the transaction number block 96 to the end-of-printing status data (S22), and sends an end-of-printing report containing the transaction number to the IP server 70 (S23).

When the IP server 70 then sends the second print data in response to this end-of-printing report, the interface device 51 receives the second print data (S24) and appends the paper cut command stored in the paper cut command block 97 to the end of the second print data (S25). The interface device 51 then applies a second print data print command and a paper cut command processing command to the printing unit 85 (S26).

By thus adding the paper cut command to the end of the second print data, the second print data is printed on the receipt 61 as shown in Fig. 6, the paper cutter of the printer then cuts the trailing end of the receipt after print-out of the second print data, and a receipt 61 on which the first print data and the second print data are consecutively printed is issued without cutting the paper between the first print data and the second print data. If the printer does not have an automatic paper cutter, the receipt waits to be manually cut by the operator.

A divider line is printed between the first and the second print data when a paper cut command is received in the first print data because a divider line print command is substituted for the paper cut command (S16, Fig. 7). The boundary between the first print data and the second print data is thus clearly delineated, the customer can use this divider line to know where to cut the receipt from any coupon following and corresponding to the second print data, and coupons and the like can be compactly stored.

If second print data is not received from the IP server 70 (that is, when the no_data status indicating that second print data was not sent from the IP server 70 is received because ASP none of the product codes in the first print data is found in the ASP information table), the receipt 61 will be cut immediately after the divider line. The divider line data could, of course, be omitted in this case.

The operation of the IP server 70 from processing the first print data to processing the second print data is described next with reference to Fig. 9.

When first print data is received from the interface device 51 (S31), the IP server 70 references the ASP information table and generates second print data relating to the products contained in the first print data (S32). If the first print data received corresponds one of multiple printing lines the process jumps to the end skipping steps S33 to S36 as long as no end-of-printing notice is included in the received first print data. This means steps S31 and S32 may be executed multiple times once for each printing line and the second print data generated are accumulated. When the first print data includes the end-of-printing notice and the transaction number, steps S33 to S36 are executed following step S32. Step S33 receives the end-of printing notice. Step S34 extracts the transaction number from the first print data and then adds it to the final accumulated second print data (S35), and step S36 stores the second print data and the transaction number in a buffer 76 (see Fig. 1). This second print data is also stored in the database 78 keyed to the transaction number (S34).

Note that the transaction number and the ASP information codes identifying the content of the second print data (the ASP information) can be stored in the database 78 instead of storing the second print data itself. The store, date, and time that the receipt is issued, a second print data creation number, an ID code for the POS terminal 20 and operator, and the product codes can additionally be stored.

If a coupon is issued or used improperly, storing the second print data generation history linked to the specific transaction number as described above enables retrieving the information printed on the coupon and the other information linked to the coupon to reference the store and date that the coupon was issued, for example, thereby helping to prevent unauthorized use.

If an end-of-printing report with an attached transaction number is received from the interface device 51 (S35), the buffer 76 is searched for second print data containing the same transaction number, and the located second print data is sent to the interface device 51 (S36). The transaction number can be omitted from this transmission if desired.

As described above, this embodiment of the invention sends an end-of-printing report to the IP server 70 to trigger transmission of the second print data when the printing unit 85 finishes processing the last line of the first print data, and the printer 50 can thus acquire the second print data when there is no unprocessed print data remaining in the data storage unit 80. The data storage unit 80 of the printer 50 is thus prevented from overflowing, and both the first print data and second print data can be reliably printed.

Furthermore, the interface device 51 will not mistakenly send the second print data to the wrong printer 50 when the IP server 70 is connected to a plurality of terminal computers 40 and printers 50 because the interface device 51 adds and sends a transaction number with the end-of-printing report to the IP server 70 when processing the last line of print data ends, and the IP server 70 thus returns second print data containing a transaction number matching the received transaction number to the interface device 51.

Thus, when the IP server 70 is connected to a plurality of terminal computers 40 and printers 50, the IP server 70 must generate the second print data based on the first print data received from a particular one of the plural terminal computers 40, and must return the second print data to the printer 50 of the terminal computer 40 that sent the first print data. The first print data is normally sent with an identifier (printer identification command) identifying the printer 50 corresponding to the particular terminal computer 40 sending the first print data, but if data is successively sent from the same terminal computer 40, the second print data must be generated while simultaneously interpreting first print data containing the same identifier. As a result, the second print data could be output at the wrong timing, and the wrong ASP information could be printed.

The present invention avoids this problem by adding a respective transaction number unique to the respective transaction process to the end-of-printing report sent to the IP server to trigger sending the second print data, and the printer 50 can thus acquire the correct ASP information at the appropriate timing (these transaction numbers are also uniquely related to respective transactions even when multiple terminal computers 40 are connected to the same IP server).

Furthermore, conventional POS systems generally generate a unique transaction number already when print data for a transaction process is produced. By using this transaction number, the processing load on the terminal computer 40 can be reduced and there is no need to add a new process or function for generating transaction numbers to the terminal computer 40.

The transaction number extraction process can also be omitted from the IP server 70 because the interface device 51 extracts the transaction number from the first print data (see S13, Fig. 7).

Moreover, when the IP server 70 is connected to a plurality of terminal computers 40 and printers 50, the first print data format could differ depending upon the terminal computer 40. However, by configuring the interface device 51 for the terminal computer 40 to which the interface device 51 is connected, transaction numbers can be extracted from first print data in different formats using a common standard (the transaction number acquisition standard of the IP server 70). As a result, the IP server 70 can acquire transaction numbers without considering differences in the data formats used by different terminal computers 40.

In the embodiment described above, the interface device 51 sends an end-of-printing report to the IP server 70 when the printing process is completed for the last line. Alternatively, the end-of-printing report could be output when the printing process is completed for the second to last line, for example. The specific data determining the timing at which the end-of-printing report is output in this situation is preferably set to data near the last data.

More specifically, if this specific data is the print data for the second to last line, the interface device 51 outputs the end-of-printing report to the IP server 70 when processing this second to last line of print data ends. Receiving this end-of-printing report then triggers the IP server 70 to send the second print data to the interface device 51. The printer 50 can thus acquire the second print data while the last line of print data remains in the data storage unit 80. It will be appreciated that using data as close as possible to the last print data line as the specific trigger data more reliably prevents a buffer overflow of the data storage unit 80 and thus more reliably assures that both first and second print data can be printed.

Depending upon the capacity of the receive buffer, however, any specific data that precedes the last data but consistently indicates the approaching end of the receipt, such as a specific text string (such as "total" or "sales tax") that is printed on every receipt, can be used as this specific data. This arrangement enables the second print data to be acquired at an earlier time and thus enables printing both first and second print data more quickly. The timing at which the end-of-printing report is output can thus be desirably set based on throughput.

The paper cut command is temporarily stored when it is detected (S15 in Fig. 7), but this step can be omitted. The paper cut command can also be used as the end identification code (the interface device 51 is configured to send the end-of-printing report to the IP server 70 when processing the paper cut command ends). In this case the first print data and the second print data are printed on physically separate receipts 61. In this situation the IP server 70 or interface device 51 preferably adds a paper cut command after the second print data. This enables issuing a receipt 61 that is automatically cut at the trailing end after printing the second print data ends.

In the embodiment described above, the transaction number is not added to the second print data sent by the IP server 70 to the interface device 51, but the IP server 70 could obviously add the transaction number to the second print data. As described above, a transaction number unique to each transaction process is added to the end status data sent by the interface device 51 to the IP server 70, and the IP server 70 returns second print data corresponding to the received transaction number to the interface device 51. Sending the wrong second print data is thus unlikely, but even if an error or a trouble occurs in the POS terminal, the unique number can facilitate matching of the each data in the POS system. When the transaction number is printed on each of a receipt and a material for additional information corresponding to the receipt, it is possible to confirm the matching between them even if the printed materials are separated.
If the transaction numbers do not match, the interface device 51 preferably sends status data (a cannot_receive error) indicating that the second print data cannot be received to the IP server 70. In this situation the IP server 70 searches whether the same transaction number is found in other second print data that is still unsent and sends that second print data if found, thereby enabling the interface device 51 to acquire the correct second print data. If the transaction number is not found, an error likely occurred. A no_data status is therefore sent to the interface device 51, causing the operating status indicator 57 of the interface device 51 to flash and thus prompting the operator to resend the first print data from the terminal computer 40.

In the above-described embodiment, the interface device 51 extracts the transaction number (S13 in Fig. 7), but, alternatively, the printer driver 142 of the terminal computer 40 (see Fig. 1) could extract the transaction number. This arrangement would eliminate the transaction number extraction process in the interface device 51 while the printer driver 142 can be configured for the terminal computer 40 in which the printer driver 142 is used. The IP server 70 can therefore still acquire the transaction numbers without considering differences in the data formats used by different terminal computers 40.

Yet further, in the foregoing embodiment the POS application 146 sets the transaction numbers, but the printer driver 142 can alternatively set the transaction numbers.

### Second Embodiment

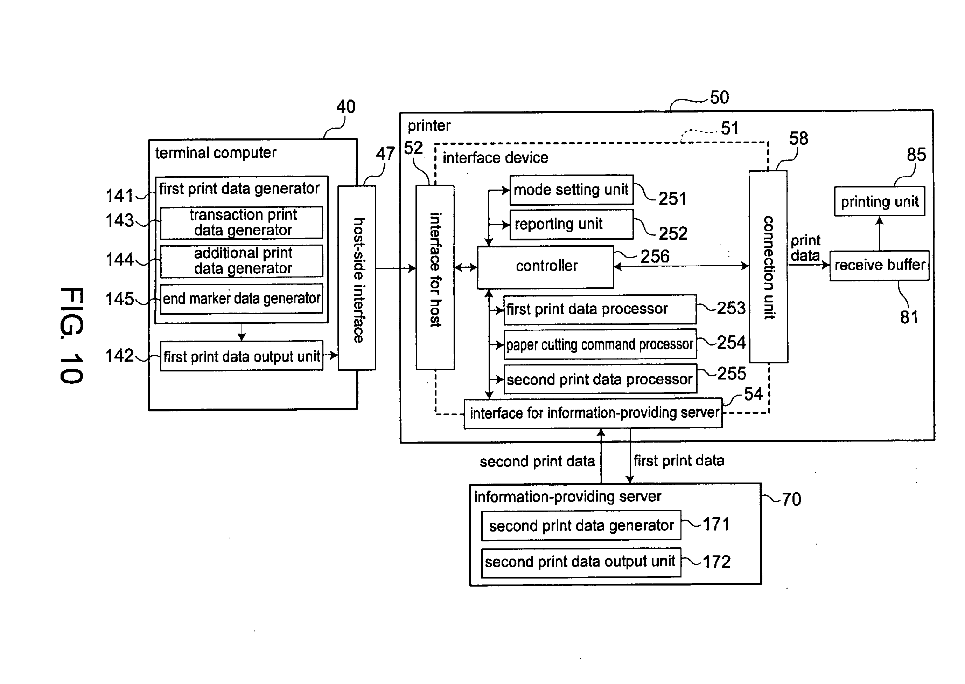

A second embodiment of the present invention is described next below with reference to Fig. 10 to Fig. 16.

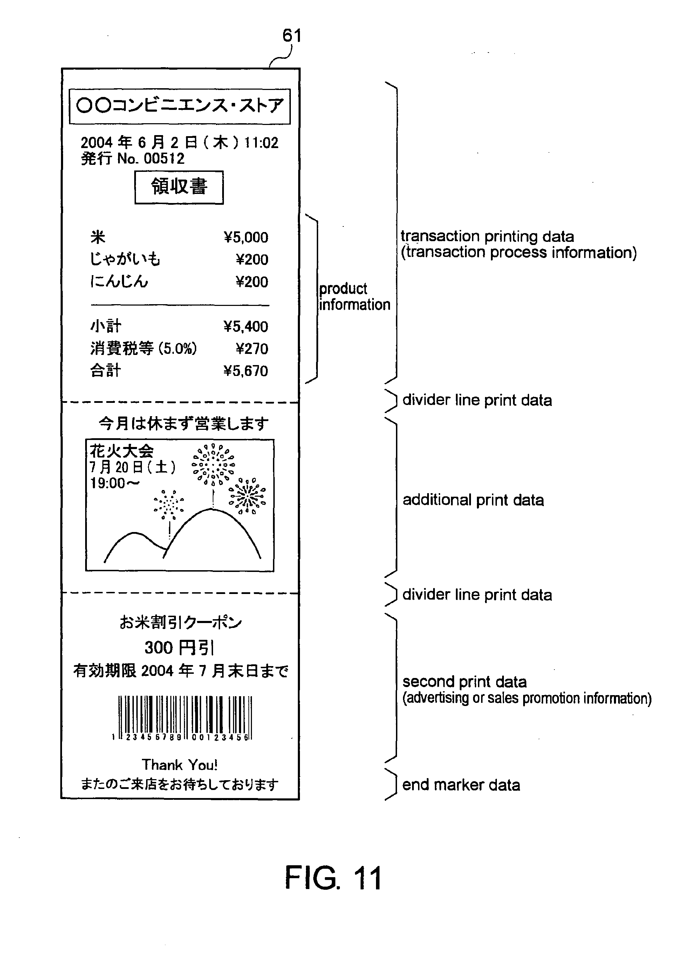

In the first embodiment the first print data was comprised of the transaction printing data, end marker data and paper cut command. In this second embodiment of the invention the first print data further includes additional print data (see Fig. 11). As will be explained in more detail below, the additional print data are printed in the waiting time between the end of printing the first print data (more particularly, the transaction printing data) and the start of printing the second print data. As a result, this waiting time can be used effectively. Problems resulting from the operator mistakenly thinking that printing has ended and tearing off the receipt when printing the first print data ends can thus be avoided.

This second embodiment of the invention is described below focusing on the differences from the first embodiment. Note that sending the end status data from the interface device 51 to the IP server 70 is not described below to simplify the following description of the second embodiment.

As shown in Fig. 11, a receipt 61 on which ASP information is also printed in this embodiment contains first print data containing specific information such as product information and a transaction number, additional print data printed after the first print data and including event information or sale information issued by the store, second print data for the ASP information acquired from the IP server 70, end marker data such as a message or image indicating the end of the printing process for one transaction process, and divider line print data denoting the boundary between the first print data and additional print data and/or the boundary between the additional print data and second print data.

The control configuration of a printing system in this embodiment is described next with reference to the function block diagram shown in Fig. 10. As shown in Fig. 10 a terminal computer 40 has a first print data generator 141 for generating first print data of primarily product information, and a first print data output unit 142.

The first print data generator 141 has a transaction printing data generator 143 for generating print data for a transaction process based on the transaction information, an additional print data generator 144 for generating print data for the above-mentioned additional information, and an end marker data generator 145 for generating end marker data.

While the major part of the first print data generator 141 can be rendered with the POS application 146, functions other than the transaction printing data generator 143, specifically the additional print data generator 144 and end marker data generator 145, can be rendered in the printer driver 142.

The additional print data and end marker data can be text data representing a specific phrase, data denoting a specific mark or symbol, or even image data denoting a specific picture or logo, for example.

The transaction printing data, additional print data, and marker print data are sent to the interface device 51 together with a specific identifier indicating the beginning of the data.

The interface device 51 has a mode setting unit 251 and a reporting unit 252. The mode setting unit 251 enables selecting an IP (information-providing) mode in which second print data is provided, or an NIP (non-information-providing) mode in which the second print data is not provided. The mode setting unit 251 is a DIP switch or software switch. When the NIP mode is set, the interface device 51 does not send the first print data received from the terminal computer 40 to the IP server 70. Furthermore, because the second print data printing process does not run when the NIP mode is set, printing a divider line before the second print data is not necessary, and the divider line print data is therefore not generated.

The reporting unit 252 is composed of LEDs 56 (printing status indicator) and 57 (operating status indicator). LED 57 indicates from which interface data is being received, for example, and LED 56 indicates that printing is in progress. Therefore, if the reporting unit 252 is located where it can be seen by the operator, the operator can easily know if data is being received, and this can be helpful when issuing a receipt.

The interface device 51 also has a first print data processor 253, paper cut command processor 254, second print data processor 255, and a controller 256 that controls these other components.

When the first print data (including additional print data and end marker data) is received from the terminal computer 40, the first print data processor 253 sends the first print data without the additional print data and the end marker data (that is, only sends the transaction printing data) to the printing unit 85 with a print command for printing, and also forwards this first print data to the IP server 70. Note, however, that the first print data is sent to the IP server 70 only when the IP mode is active. Furthermore, unless otherwise stated below, the process described below assumes that the IP mode is set and active.

The paper cut command processor 254 temporarily stores the paper cut command when a paper cut command is received in the first print data, and outputs a print command for the divider line print data and the additional print data.

The second print data processor 255 adds the end marker data and paper cut command after the second print data when second print data is received from the IP server 70, and asserts print and process commands.

Thus comprised, when first print data to which additional print data and end marker data is added is received from the terminal computer 40, the controller 256 controls the first print data processor 253 to send the first print data without the additional print data and the end marker data for printing to the printing unit 85, and also send the first print data not including the additional print data and the end marker data to the IP server 70. If the NIP mode is set, the first print data processor 253 does not send the first print data to the IP server 70.

When the controller 256 detects a paper cut command within the first print data as the normal termination data, the controller 256 controls the paper cut command processor 254 to temporarily store the paper cut command and not output it to the printer. The end marker data is also stored with the paper cut command. Pre-stored divider line print data is then inserted before the additional print data, and the divider line print data and the additional print data are printed. Note that if a paper cut command is detected when the NIP mode is active, the controller 256 controls the paper cut command processor 254 to temporarily store the paper cut command, adds the paper cut command after the divider line print data and additional print data, and outputs commands to print the data and process the paper cut command. Divider line print data can also be inserted between the additional print data and second print data to print a divider line so that the printed output is easier to read.

When second print data is received from the IP server 70, the controller 256 controls the second print data processor 255 to add the saved end marker data after the second print data, then append the saved paper cut command after the end marker data, and issue printing and processing commands.

Note that the second print data print command is omitted if a no_data status signal indicating that second print data is not sent from the IP server 70 is received; in this case only the end marker data is printed and the paper cut command is processed.

If a paper cut command is detected among the first print data, the IP server 70 stops interpreting the first print data, generates the second print data based on the interpreted data, and sends the resulting second print data to the interface device 51. By waiting to receive the paper cut command as end status data sent from the interface device 51 before starting to send the second print data to the interface device 51, sending the second print data starts after the IP server 70 knows that the interface device 51 is ready to receive data, and data can therefore be transmitted more reliably.

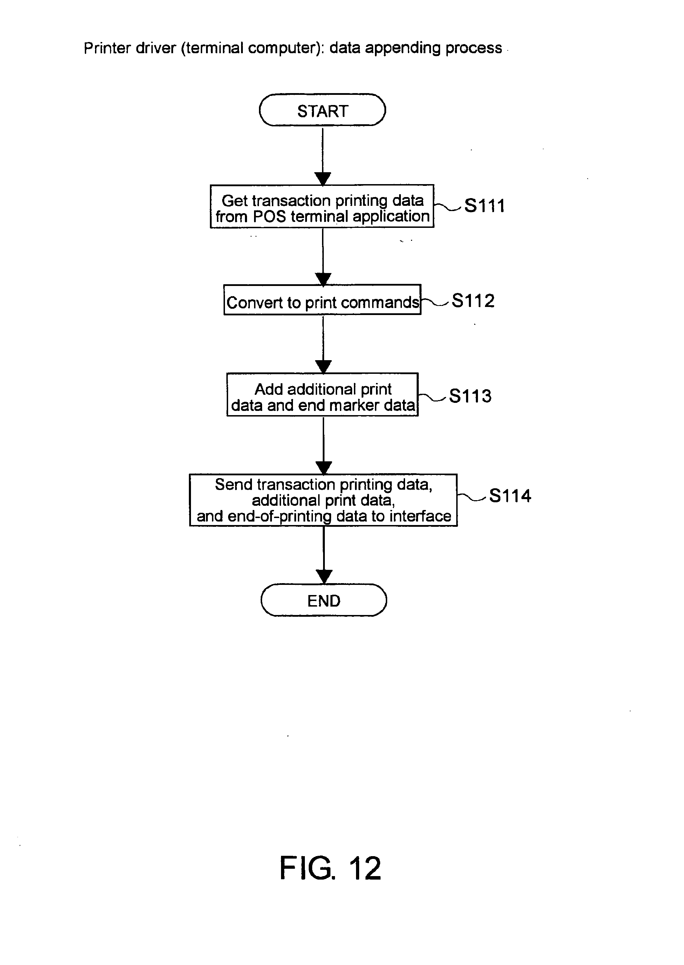

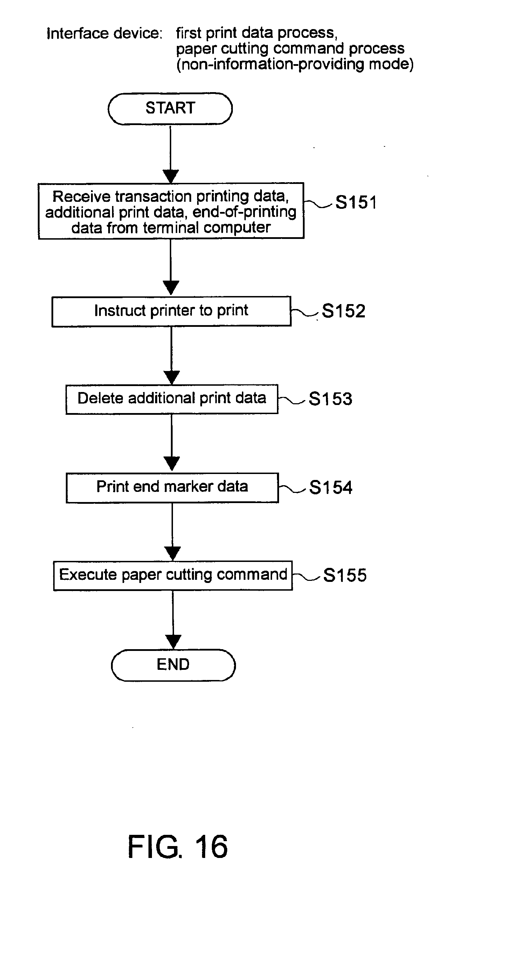

The printing control method in this second embodiment of the invention is described next with reference to the flow charts in Fig. 12 to Fig. 16. Fig. 12 to Fig. 15 show the printing control method when the interface device 51 is set to the IP mode, and Fig. 16 shows the printing control method when the NIP mode is set. Operation when the interface device 51 is set to the IP mode is therefore described first below with reference to Fig. 12 to Fig. 15.

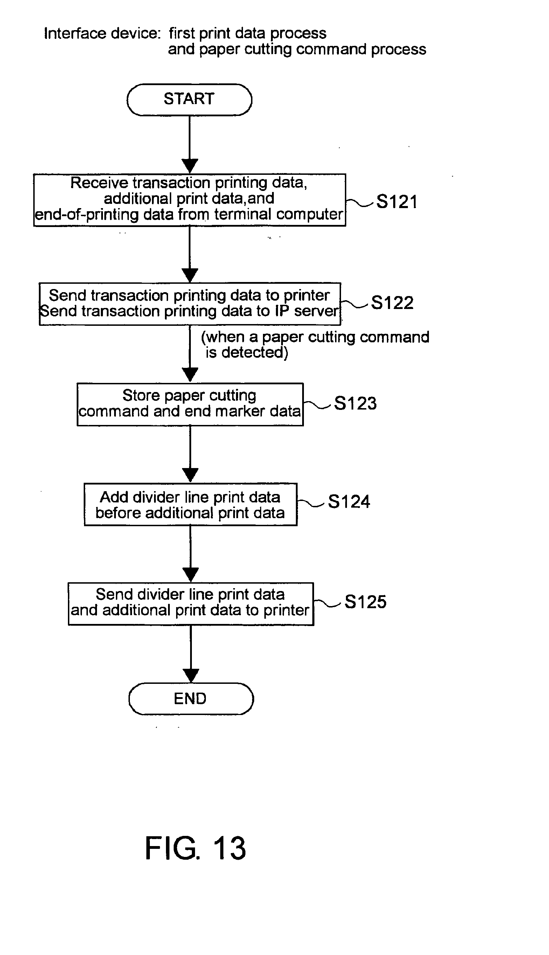

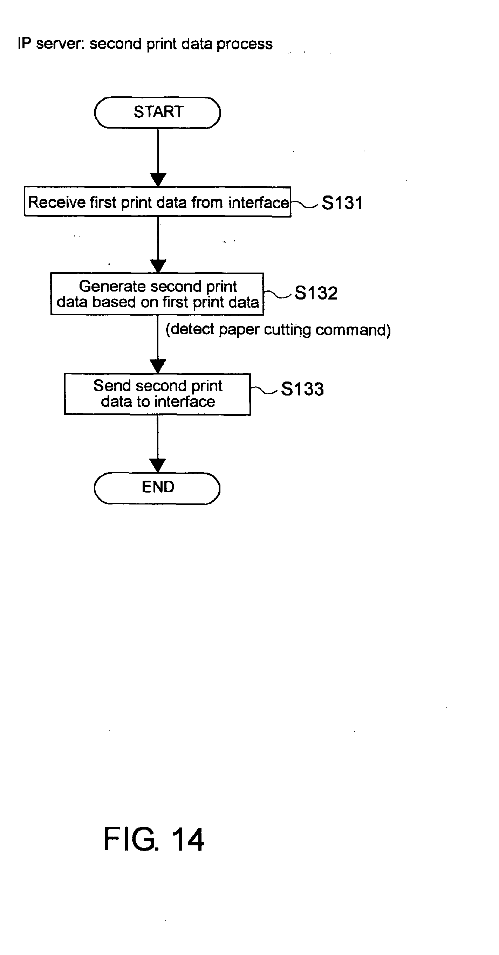

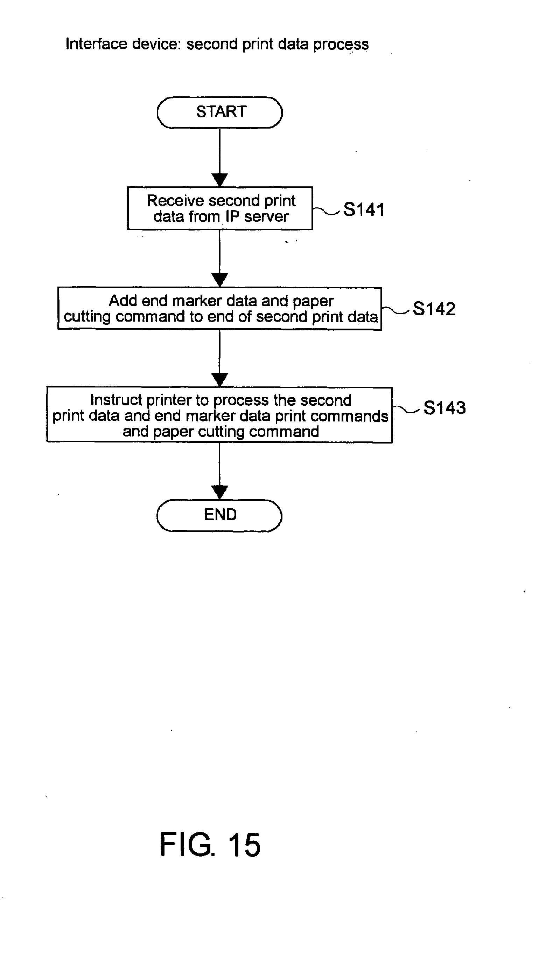

Fig. 12 shows the data adding process of the printer driver 142, Fig. 13 shows processing the first print data and paper cut command by the interface device 51, Fig. 14 shows processing the second print data by the IP server 70, and Fig. 15 shows processing the second print data by the interface device 51.

As shown in Fig. 12, the printer driver 142 in the terminal computer 40 converts transaction printing data acquired from the POS application 146 (S111) to specific printer commands for the printer 50 (S112), and appends the specific additional print data and end marker data to the transaction printing data (S113). An identifier is inserted at the beginning of the additional print data and at the beginning of the end marker data so that the interface device 51 can use these identifiers to detect the additional print data and the end marker data. As a result, the order of the additional print data and the end marker data can be reversed as desired.

After the additional print data and end marker data is added to the transaction printing data, the printer driver 142 outputs the result as the first print data to the interface device 51 (S114).

The first print data output unit 142 generates the additional print data based on data read from memory. The additional print data can be varied according to the time or even customer. The additional print data and the end marker data to be printed could be selectively set by, for example, storing multiple additional print data files and multiple end marker data files in memory, and enabling the operator to select the desired data from a printer driver configuration screen presented on the operator display 42a. The content of the additional print data can thus be varied according to the needs of the store, for example, and the printed output can thus be more effectively used as an advertising medium.

Processing the first print data and the paper cut command by the interface device 51 is described next with reference to Fig. 13.

When the interface device 51 receives the first print data including additional print data and end marker data from the terminal computer 40 (S121), the interface device 51 sends a predetermined line of the first print data excluding the additional print data and end marker data to the IP server 70 and to the printing unit 85 with a print instruction (S122).

When the additional print data and end marker data are received, the additional print data and end marker data are temporarily stored in the additional print data block 95 and end marker data block 98, respectively, (S123). The additional print data and end marker data are not transferred to the IP server 70. When a paper cut command (which generally comes last) is detected in the received print data, the paper cut command is stored in the cut command block 97(S123). The saved paper cut command and end marker data are later appended to the second print data sent from the IP server 70 (S142, Fig. 15). The divider line print data is added before the additional print data (S124), and the printing unit 85 is then instructed to print the divider line print data and the additional print data (S125).

Processing the second print data by the IP server 70 is described next with reference to Fig. 14.

When the IP server 70 receives first print data from the interface device 51 (S131), the IP server 70 starts interpreting the first print data, references the ASP information table, and generates second print data related to the products contained in the first print data (S132). When a paper cut command is detected in the first print data, interpreting the first print data ends and the generated second print data is sent to the interface device 51 (S133).

Processing the second print data by the interface device 51 is described next with reference to Fig. 15. When the interface device 51 receives the second print data from the IP server 70 (S141), the interface device 51 appends the stored end marker data to the second print data and appends the saved paper cut command after the end marker data (S142). The interface device 51 then sends a print command for this second print data and end marker data, and a paper cut command processing command to the print processing unit 60 (S143).

By adding end marker data and a paper cut command after the second print data in a printer having an automatic paper cutter, the end marker data is printed after the second print data and the receipt 61 is then cut at the trailing end after the end marker data is printed as shown in Fig. 11.

If the printer does not have an automatic paper cutter, the operator can manually tear off the receipt after seeing that the end marker data has been printed.

Furthermore, when a paper cut command is detected in the first print data in step S125 in Fig. 13, the divider line print data and the additional print data are printed. As a result, the additional print data is printed after the first print data and a divider line is printed between the first print data and additional print data. The boundary between the first print data and other data is thus obvious, and the customer can use this divider line as a cutting line for separating the receipt so that just the coupon, for example, can be given to the operator. Furthermore, because the additional print data can be saved, the store can expect to derive some advertising benefit from the additional print data.

Operation when the interface device 51 is set to the NIP mode is described next with reference to Fig. 16. In this embodiment of the invention additional print data sent from the terminal computer is also not printed when the NIP mode is active. Fig. 16 shows processing the first print data and paper cut command by the interface device 51.

When the first print data, additional print data, and end marker data are received from the terminal computer 40 (S151), the interface device 51 sends a print command with each line of first print data to the printing unit 85 (S152). When a paper cut command is received (detected) in the received print data, the paper cut command is temporarily stored (S153) and the interface device 51 waits to finish receiving the additional print data and end marker data. When receiving the data is completed, the additional print data is deleted (S154), the printing unit 85 is instructed to print the divider line print data and additional print data (S155), and the saved paper cut command is then processed (S156).

Waiting for the second print data is thus obviously not necessary when the NIP mode is set, and a divider line is also not printed. As a result, paper and processing time are not consumed by printing a divider line.

As described above, when a paper cut command is detected in the first print data when the interface device 51 is set to the IP mode in this embodiment of the invention, the paper cut command is temporarily stored and divider line data and additional print data are printed. The waiting time from the end of printing the first print data and the start of printing the second print data can thus be used effectively for other printing purposes.

Furthermore, because the paper cut command is temporarily stored and then appended to the second print data, a receipt 61 can be printed continuously with the first print data and the second print data without a physical break therebetween.

The receipt 61 can also be used as an effective advertising medium because the additional print data can be configured to include such information about upcoming sales, store holidays, and business hours.

Furthermore, additional processes for handling the additional print data are not needed in the terminal computer 40 (POS application 146) because the printer driver 142 can be used to store the additional print data and end marker data in memory. More specifically, by using the printer driver 142 to handle additional processes relating to the additional print data, the present invention can be achieved without modifying the POS application 146.

The end of printing can also be clearly indicated because the interface device 51 prints end marker data after the second print data. Therefore, even if there is a pause between printing the first print data and starting to print the second print data, the operator will not mistakenly think that printing has ended when printing the first print data stops.

Furthermore, because end marker data is printed after the first print data when second print data is not sent from the IP server 70, the operator knows in this case that second print data will not be printed, that is, that printing is over after the first print data is printed.

Yet further, by providing an IP mode in which second print data is added and an NIP mode in which second print data is not added (only the first print data is printed) to the interface device 51, the desired operating mode can be set at the store's convenience. When a business offers an "early-bird special," for example, special benefits can be provided to customers that come during the designated service time by, for example, enabling the IP mode to print ASP information for discount coupons during the designated hours, and then enabling the NIP mode at other times outside the designated hours.

Saving the paper cut command can also be omitted in this embodiment of the invention. In this case the first print data and other data are printed on separate receipts 61. Note, however, that saving the paper cut command is preferably not omitted when the NIP mode is set. When the NIP mode is set, the paper cut command is preferably saved and then added back after the additional print data (see steps S153 to S156 in Fig. 16). This prevents only the additional print data being separately printed on its own receipt 61 as a result of omitting saving the paper cut command.

The interface device 51 could also be configured to print the additional print data when some other specific data is detected instead of the paper cut command. In this case the specific data can be set as the end data (the last print data or command contained in the first print data). This arrangement enables detection of this specific data to trigger the IP server 70 to output the second print data.

Furthermore, because this specific data is the end data, the specific data will not interfere with the IP server 70 interpreting the first print data (i.e., with generating the second print data). Saving the specific data in the interface device 51 can be omitted in this arrangement.

The additional print data and end marker data added to the first print data are stored by the printer driver 142 in this embodiment of the invention, but the data could be previously stored in the interface device 51. By thus enabling the interface device 51 to store and add the additional print data and/or end marker data, the present invention can be achieved without modifying any of the POS application 146 and the first print data output unit 142.

Furthermore, adding both the additional print data and end marker data is not always necessary, and only one of these could be used and added as desired. Yet further, one of these could be saved by the printer driver 142 and the other by the interface device 51.

The divider line print data added after the additional print data in this embodiment is first stored in the interface device 51 and added by the interface device 51 as described above. However, the divider line print data could be stored and added by the printer driver 142. In this situation the printer driver 142 adds the divider line print data, additional print data, and end marker data after the first print data. In this case, the divider line print data can also be added as part of the additional print data.

Printing the additional print data can also be omitted. More specifically, the terminal computer 40 could send the additional print data to the interface device 51 only when printing of additional print data print is requested from the interface device 51.

The IP mode and NIP mode selection is made using a DIP switch in the foregoing second embodiment, but the terminal computer 40 could alternatively assert a mode selection (switching) command to set the desired mode.

If a software (logical) switch is used, a logical switch that turns on/off according to the state of a control flag is set in the interface device 51, and the operating mode is determined according to the state of this switch. By thus using a command from the terminal computer 40 to set the operating mode, the mode can be easily changed when, for example, the ASP information is a discount coupon issued only at specific times, such as for a so-called early-bird special (that is, the mode change is time controlled).

Furthermore, when a no_data status signal indicating that second print data is not sent from the IP server 70 is received in the foregoing embodiments, the second print data print command is omitted and only the end marker data is printed and the paper cut command is processed. In this situation, however, a phrase (called the "second end marker data" below) such as "no coupons are available for these products" can be substituted for the end marker data. This second end marker data can also be previously stored in the interface device 51, the printer driver 142 could add the additional print data, end marker data, and second end marker data after the first print data, and the interface device 51 could delete the end marker data or second end marker data according to whether or not the second print data is received.

This arrangement clearly indicates for the customer that no products qualifying for a coupon, for example, were purchased, and the operator knows that printing is completed when either the end marker data or second end marker data is printed.

Furthermore, the address of a website that tells what products qualify for a coupon can be printed if no products that qualify for a coupon were purchased, thereby enabling the customer to discover what products qualify and thus encourage the customer to purchase certain products.

The foregoing embodiments of the invention assume that a paper cut command is contained in the first print data generated by the POS application 146. If the POS application 146 does not insert a paper cut command in the first print data, however, the printer driver 142 could be configured to add a paper cut command after the end of the first print data.

A printing system according to the present invention is described above with reference to a POS system 10. The invention can also be used in a printing system comprising a first host device for generating first print data for each process, a second host device that generates second print data based on interpreting the first print data, and a printing apparatus having an expansion port in which an interface device having one or more communication ports for connecting to the first host device and second host device can be freely removably installed.

The present invention is not limited to a terminal computer 40 (POS application 146) as described above, and can also be implemented in a conventional arrangement (in which an information-providing server is connected to a terminal computer, and the terminal computer runs a lookup process identical to the lookup process for searching the product master on the POS server on the IP server to acquire the ASP information) by modifying the terminal computer 40 or POS application 146. More specifically, to implement the present invention in a conventional arrangement, the functions of the interface device 51 in the present invention are handled by the printer driver 142, and the first print data output by the POS application 146 is sent through the printer driver 142 to the IP server 70. The printer driver 142 can then extract transaction numbers, and send the end status data acquired from the interface device 51 to the IP server 70.

The interface device 51 is described in the foregoing embodiments as having two communication ports, specifically a host interface 52 to which the terminal computer 40 is connected, and an IP server interface 54 to which the IP server 70 is connected. The first print data and second print data could, however, be received through a single communication port connected to a hub, for example. In this case a unique ID would be assigned to each host device (terminal computer 40 and/or IP server 70), and this device ID would be attached to the print data and sent to the interface device 51, thereby enabling the interface device 51 to identify what data was received.

Furthermore, a paper cut command is usually added to the first print data. An alternative method can therefore recognize received data containing a paper cut command to be first print data, and data not containing a paper cut command to be second print data.

An adapter (connection device) having three communication ports (interfaces) for connecting a terminal computer 40, IP server 70, and printer 50 can also be used instead of the interface device 51 to execute the functions of the interface device 51 described above.

The functions (means) of the interface device 51 described in the foregoing embodiments can also be rendered as a computer-executable program. This program can be stored on a recording medium not shown and installed in a personal computer, for example, to achieve the method of controlling the printing system of the present invention on a system other than a POS system 10 as described above.

The recording medium could be a CD-ROM, flash ROM, a memory card (Compact Flash (R), Smart media, or memory stick, for example), Compact Disc, magneto-optical disc, DVD, floppy disk, or other computer-readable medium.

## Claims

1. A printing system for printing a receipt (61) carrying information related to a transaction process, the system comprising:
a terminal computer (40) for generating first print data containing transaction printing data for creating and printing the receipt (61);
an information-providing server (70) for generating second print data containing advertising or sales promotion information for each transaction process according to the content of the first print data; and
a printing apparatus (50) for printing based on the first print data and the second print data, the printing apparatus (50) having an interface device (51) with a communication port (52, 54) for receiving the first print data and the second print data and a print processing unit (60) for printing data received via the interface device (51) on paper as said receipt (61);
wherein the terminal computer (40) comprises a first print data generating unit (141) for generating the first print data, and a first print data output unit (142) for sending the first print data to the printing apparatus (50);
the interface device (51) comprises
- a first print data processing unit (151) for sending the first print data received from the terminal computer (40) to the print processing unit (60) for printing while also sending the first print data to the information-providing server (70), and
- a second print data processing unit (153) for sending the second print data received from the information-providing server (70) to the print processing unit (60) for printing; and
the information-providing server (70) comprises
- a second print data generating unit (171) for analyzing the first print data received from the interface device (51), determining if the first print data contains product information for which advertising or sales promotion information should be added, and generating the second print data if said product information is contained in the first print data, and
- a second print data output unit (172) for sending the resulting second print data to the interface device (51).

2. The system of claim 1, wherein:
the interface device (51) is adapted to generate and send end status data denoting receipt (61) of an end identification code to the information-providing server (70) when an end identification code is received from the terminal computer (40), said end identification code being specific data indicating the substantial end of the first print data; and
the information-providing server (70) is adapted to terminate analyzing the first print data when the end status data is received, to generate the second print data based on the result of the analysis, and to send the second print data to the interface device (51).

3. The system of claim 2, wherein:
the first print data generating unit (141) is adapted to set a different transaction number for each transaction process, and to generate the first print data containing the respective transaction number;
the first print data processing unit (151) is adapted to extract the transaction number from the first print data, and send the end status data with the transaction number appended thereto to the information-providing server (70); and
the information-providing server (70) is adapted to cause the second print data generating unit (171) to generate the second print data if product information for which advertising or sales promotion information is to be added is found in the first print data after analyzing the first print data ends, to add the transaction number to the second print data, and to pass the resulting second print data through the second print data output unit (172) to the interface device (51).

4. The system of claim 1, wherein the end identification code is a paper cut command controlling cutting the trailing end of the paper, and the end status data is the same as the paper cut command or contains the same data string.

5. The system of claim 2, wherein:
the first print data generating unit (141) is adapted to set a different transaction number for each transaction process and to generate the first print data containing the respective transaction number, and
the terminal computer comprises a printer driver (147) for controlling the printing apparatus (50),
said printer driver (147) comprising a transaction number appending unit for extracting the transaction number from the first print data, generating transaction number data, and adding the transaction number data to the first print data so that the transaction number data can be distinguished from the print data;
the interface device (51) is adapted to send the first print data containing the added transaction number data received from the terminal computer (40) to the information-providing server (70); and
the information-providing server (70) is adapted to generate the second print data based on the analysis of the first print data and to add the transaction number data by means of the second print data generating unit (171), and to send the second print data having the transaction number data added thereto to the interface device (51) by means of the second print data output unit (172).

6. The system of claim 3, wherein the information-providing server (70) further comprises a print data generation history storage unit (173) for storing a record of second print data generation linked to the transaction number.

7. The system of claim 4, wherein the interface device (51) is adapted to interpret the first print data received from the terminal computer (40), to temporarily store a paper cut command controlling cutting the trailing end of the paper when such paper cut command is detected, and to send data other than the paper cut command in the first print data to said print processing unit (60), and to add the stored paper cut command after the second print data when the second print data is received from the information-providing server (70) and output both to said print processing unit (60).

8. The system of claim 7, wherein the interface device (51) is adapted to generate specific print data upon detecting the paper cut command, to send the specific print data to the print processing unit (60), and to assert a print command.

9. The system of claim 8, wherein the specific print data is divider line print data for printing a divider line widthwise across the paper.

10. The system of claim 9, wherein:
the terminal computer (40) is adapted to store end marker data as last print data for printing near the trailing end of the receipt (61), and to send to the interface device (51) the end marker data added distinguishably from the transaction printing data after the first print data;
the interface device (51) is adapted to temporarily store the end marker data without outputting it to the print processing unit (60) when a paper cut command is detected in the first print data, and to issue a divider line print data print command; and
the second print data processing unit (153) is adapted to add the stored end marker data and the paper cut command after the second print data when second print data is received, to assert a second print data and end marker data print command, and to assert a paper cut command processing instruction.

11. The system of claim 10, wherein:
the information-providing server (70) is adapted to generate non-printing status data if product information, for which advertising or sales promotion information should be added, is not contained in the first print data, and to send the non-printing status data to the interface device (51), the non-printing status data indicating that second print data is not output; and
the second print data processing unit (153) is responsive to the non-printing status data to omit the second print data print command, and to assert the end marker data print command and paper cut command processing instruction.

12. The system of claim 4, wherein:
the interface device (51) further comprises a mode setting unit (251) for setting an information-providing mode for operating both the first print data processing unit (151) and the second print data processing unit (153), or a non-information-providing mode in which the second print data processing unit (153) is not operated; and
the first print data processing unit (151) is responsive to the non-information-providing mode being set to omit sending the first print data to the information-providing server (70), and to assert the paper cut command after the first print data print command without storing the paper cut command when a paper cut command is detected in the first print data.

13. The system of claim 12, wherein the mode setting unit (251) enables switching the mode setting by means of a DIP switch disposed in the interface device (51) or a software switch built in to the interface.

14. The system of claim 1, wherein the interface device (51) is removably installed in a printing apparatus (50) having said print processing unit (60).

15. The system of claim 1, wherein the interface device (51) comprises two communication ports (52, 54), a first port for connection to the terminal computer (40) and a second port for connection to the information-providing server (70).

16. A POS system comprising:
the system of claim 1; and
a POS server (30) for centrally managing a plurality of terminal computers (40) connected thereto.

17. A connection device that can be detachably attached to the body of the printing apparatus (50) in the system of claim 1 to act as said interface device (51), the device comprising:
a first print data processing unit (151) for sending the first print data received from the terminal computer (40) to the print processing unit (60) for printing while also sending the first print data to the information-providing server (70), and
a second print data processing unit (153) for sending the second print data received from the information-providing server (70) to the print processing unit (60).

18. A control method for a printing system that comprises a first host device (40) for generating first print data, a second host device (70) for generating second print data based on the result of analysis of the first print data, and a printing apparatus (50) having an interface device (51) with a communication port (52, 54) for receiving the first print data and the second print data, and printing based on said first print data and the second print data, wherein method comprises the steps of:
a) wherein the interface device (51) sends the first print data received from the first host device to the printing apparatus (50) and asserts a print command, and also sends the first print data to the second host device;
b) wherein the second host device analyzes the first print data received from the interface device (51), detects if product information for which advertising or sales promotion information should be added is contained in the first print data, and generates the second print data if such product information is detected;
c) wherein the second host device sends the generated second print data to the interface device (51); and
d) wherein the interface device (51) sends the second print data received from the second host device to the printing apparatus (50) and asserts a print command.

19. The method of claim 18, further comprising the step of:
e) wherein the interface device (51) sends end status data to the second host device when an end identification code that is contained in the first print data and indicates the substantial end of the first print data is received from the terminal computer (40); and
f) wherein the second host device terminates analyzing the first print data when the end status data is received, and generates and sends the second print data based on the result of analysis to the interface device (51).

20. The method of claim 19, further comprising the steps of:
g) wherein the interface device (51) sends to the printing apparatus (50) the first print data but not a paper cut command when such paper cut command is detected in the first print data received from the first host device, and temporarily stores the paper cut command;
wherein step d) comprises sending the stored paper cut command after the second print data to the printing apparatus (50) if the interface device (51) receives the second print data from the second host device.

21. The method of claim 20, wherein step g) comprises that the interface device (51) generates specific print data and sends said specific print data to the printing apparatus (50) for printing.

22. A medium readable by a machine, the medium carrying a program of instructions executable by the machine to perform the method according to any of claims 18 to 21.
